# EUROPEAN PATENT APPLICATION

(11) **EP 4 851 523 A1**
(43) Date of publication of application: **09.12.2026**
(21) Application number: 25181239.2
(22) Date of filing: 06.06.2025
(51) Int. Cl.: F16M 13/04, F16M 11/08, B66D 3/00, B66D 3/18

(54) **CARRYING DEVICE FOR CARRYING A CAMERA, CAMERA SYSTEM COMPRISING A CARRYING DEVICE AND COMPUTER-IMPLEMENTED METHOD FOR POSITIONING THE CAMERA MOUNT OF THE CARRYING DEVICE**

(71) Applicant: RSC - Reinhard Steiner Creation, 9200 Gossau (CH)
(72) Inventor: Steiner, Reinhard J., 9500 Wil (CH)
(74) Representative: Hepp Wenger Ryffel AG

(57) **Abstract**

The invention discloses a carrying device (1) for carrying a camera (100). The carrying device (1) comprises a mounting element (2) for mounting the carrying device (1) to a movable object, a support arm (3), a cable (4) and a camera mount (5) for holding at least one camera (100). The support arm (3) comprises a first section (3a) and a second section (3b) and the first section (3a) is attachable or attached to the mounting element (2). The camera mount (5) is connected or connectable to the cable (4). The carrying device (1) comprises a motor (6) which is connected to the cable (4), and by means of which the camera mount (5) is movable. The carrying device (1) comprises a localization sensor unit (7) by means of which the motor (6) is controllable. The invention also discloses a camera system and a computer-implemented method for positioning the camera mount of the carrying device.

## Description

The invention relates to a carrying device for carrying a camera, a camera system comprising a carrying device and a camera and a computer-implemented method for positioning the camera mount of the carrying device.

Carrying devices for carrying a camera are well known. Such carrying devices are used by camera operators for all types of video production, from live broadcasts to short videos and movie productions. These cameras can be heavy and often have to be held by the camera operator for long periods of time. A carrying device can help reduce the load on the operator.

SU 1 525 665 A1 and EP 3 064 822 A1 both disclose a carrying device for a camera which can be attached to the camera operator's body. The camera is attached to the carrying device via a cable construction and a spring mechanism in order to reduce the weight on the camera operator's arms.

Both disclosures have the disadvantage that the camera moves vertically when the camera operator moves, which can lead to shaky images.

It is an object of the present invention to obviate the disadvantages of the prior art and in particular to provide a carrying device for carrying a camera, a camera system and a computer implemented method that allows a stable camera guidance.

The object is achieved by a carrying device for carrying a camera, a camera system comprising a carrying device and a camera and a computer-implemented method for positioning the camera mount of the carrying device according to the independent claims.

In particular, the object is achieved by a carrying device for carrying a camera. The carrying device comprises a mounting element for mounting the carrying device to a movable object, a support arm, a cable and a camera mount for holding at least one camera, wherein the support arm comprises a first section and a second section. The first section is attachable or attached to the mounting element and the camera mount is connected or connectable to the cable. The carrying device comprises a motor which is preferably arranged on the first section of the support arm, and connected to the cable, and by means of which the cable and thereby the camera mount is movable. The carrying device comprises a localization sensor unit by means of which the motor is controllable.

The carrying device can carry a camera. The camera to be carried can range from small cameras such as action cameras or mobile phones to mirrorless cameras or DSLR cameras to production cameras. The selection of the camera depends on the area of application.

The mounting element allows the carrying device to be attached directly or indirectly to a movable object. The movable object is preferably a human camera operator. Alternatively, the movable object may be a technical support system such as a camera crane, a studio ceiling mount, a truss structure, a dolly, a cable pulley system, or a drone. In this context, a drone refers to an unmanned aerial vehicle capable of carrying and stabilizing the carrying device during flight. The mounting element may be designed for integration with standard drone mounting interfaces, allowing airborne vertical stabilization of the camera mount.

The mounting element can be suitable for attaching the carrying device to different types of movable objects. In a preferred embodiment, the mounting element is detachably connected to the carrying device. This allows a specific mounting element to be used for the respective movable object. Nevertheless, the mounting element can also be a universal mounting element for all movable objects. In a further embodiment, the mounting element is adapted for attachment to fixed or dynamic technical structure, including but not limited to cranes, studio ceilings, truss systems, and unmanned aerial vehicles (drones). It may comprise mechanical adapters such as quick-release mechanisms, standardized clamps, flanges, or interface plates compatible with industrial mounting systems, including drone frame connectors. In the case of drones, the mounting element may be secured directly to the drone frame, gimbal interface, or payload mounting point, enabling in-flight control of the vertical position of the camera mount.

The integration of the carrying device with a drone allows for stabilized vertical positioning of the camera during aerial shots. Combined with sensor-controlled actuation, this enables highly precise altitude adjustments and compensation for drone movement, resulting in smoother, more stable footage in challenging airborne conditions.

A universal mounting element allows a flexible exchange of the movable object during image capturing and/or operation. For example, a scene can be filmed in which the mounting element is initially connected to a camera operator harness and the movable object is then switched during the filmed scene so that the mounting element is connected to a drone. This allows a uncut scene to be filmed.

The mounting element can comprise one or more belts, allowing the carrying device to be flexibly attachable to a movable object. The mounting element can comprise a quick-mounting fastener, allowing the mounting element to be attachable to a movable object particularly quickly. The mounting element can comprise a clamp, allowing the carrying device to be fixable to the movable object. The mounting element can comprise nuts and/or screws, whereby the carrying device is screwable to a movable object. This allows a particularly secure connection to be established.

The support arm allows the camera mount to be positioned and can guide the cable. In a preferred embodiment, at least a part of the second section is arranged orthogonally to the first section, allowing the camera mount to be spaced relative to the moving object to which the carrying device is attached. In one embodiment, a part of the second section can be curved and/or angled relative to the remaining part of the second section. This allows the first and second sections of the support arm to be connectable in a particularly simple and stable way.

In a preferred embodiment, the first section is positionable at the back of a camera operator during use, and a part of the second section, arranged perpendicular thereto, can be positioned above the camera operator's head. This allows a camera to be positioned comfortably in front of the camera operator and nevertheless being easy to carry.

The sections can be designed as hollow profiles. This allows for particularly lightweight construction. The sections can comprise light metal, in particular aluminum. This allows for lightweight and robust construction. In a further embodiment, the first and/or second section can comprise plastic, in particular fiber-reinforced plastic. This allows for particularly lightweight construction.

One or more cameras can be attached directly or indirectly to the camera mount. The camera mount can be designed as a platform to which the camera can be attachable. Such a camera mount is advantageous because it allows the camera to be positioned securely. The camera mount can be designed as a hook on which the camera can be hung directly or indirectly. This allows for a particularly compact and lightweight design of the carrying device. The camera mount can comprise a clamp through which the camera is fixable. This can make it particularly easy to attach the camera.

In a preferred embodiment, the camera mount can hold one camera. This allows for a compact design of the camera mount. In a further embodiment, the camera mount can hold several, in particular two, cameras. This is particularly advantageous when stereoscopic images for 3D productions are to be be created. Furthermore, such a camera mount is advantageous as it allows two cameras to be mounted redundantly.

The cable is connected or connectable to the camera mount and the motor. This allows the camera mount to be movable by the motor. The cable enables a simple and flexible connection between the camera mount and the motor. This allows the operator to move the camera freely and easily using the camera mount.

Preferably, the cable has a rope elongation according to ISO 2307:2019 of less than 10%, in particular less than 5%. Such a cable is particularly advantageous because the low rope elongation prevents the camera mount from oscillating during use. The cable preferably comprises aramid. Such a cable has high tensile strength, low rope elongation, and high wear resistance. The cable can also comprise ultra-high-molecular-weight polyethylene. Such a cable is particularly light and tensile.

The motor allows for the camera mount to be movable via the cable. This allows the camera operator's movements to be compensated for and shaky images to be avoided. The motor is preferably designed as an electric motor. The motor is preferably designed as a brushless DC motor. The motor can also be designed as a linear motor or as a DC motor with a spindle. This is particularly advantageous for heavy loads. The motor can also comprise a stepper motor. This allows a particularly inexpensive carrying device to be produced.

The localization sensor unit can determine the position of the carrying device, preferably the camera mount, outdoors and/or indoors relative to one or more targets. The motor is controllable via the sensor data from the localization sensor unit. This allows movements carried out by the camera operator to be compensated for and thereby preventing shaky images.

The carrying device can comprise a harness, which can be worn by a camera operator, and the harness can be connected to the mounting element.

This allows the carrying device to be attachable to an operator particularly easily. The harness can comprise a hip belt. This is especially advantageous as it allows the weight of the carrying device and/or the camera to be transferred to the camera operator's hips, reducing stress on the camera operator's back and arms. The harness can comprise at least one, preferably two shoulder straps. This allows the carrying device to be worn tightly and securely on the camera operator's body.

Preferably, the hip belt and/or shoulder straps are adjustable in length. This allows the harness to be individually adjustable to the body size and weight of the camera operator.

The harness can comprise padding, which increases wearing comfort and allows the carrying device to be worn for longer periods of time. The harness can also comprise breathable material. This allows the camera operator's sweat to be transported easier, which also increases wearing comfort and allows the carrying device to be worn for longer periods of time. In one embodiment, the harness can be designed as a vest, which also increases wearing comfort.

The harness can be connected to the mounting element as described before.

The mounting element can be connected to a crane and/or a camera dolly and/or a truss system.

An embodiment in which the mounting element is connected to a crane is advantageous, as this allows dynamic camera movements to be achievable, particularly from a high perspective.

An embodiment in which the mounting element is connected to a camera dolly is advantageous because it allows reproducible camera movements to be carried out.

An embodiment in which the mounting element is connected to a truss system is advantageous because a truss system can be attached to various further elements.

The mounting element can also be connected to a drone. An embodiment in which the mounting element is connected to a drone is advantageous because it allows inaccessible locations to be reachable and aerial images to be taken.

The mounting element can also be connected to a cable pulley. An embodiment in which the mounting element is connected to a cable pulley is advantageous, as this allows stable aerial images to be taken and the positioning is precisely controllable.

The carrying device can comprise a power supply unit for supplying the motor, which can be arranged on the mounting element and/or on the first section of the support arm and is preferably detachable without using tools.

The power supply unit can comprise one or more batteries. Preferably, the batteries are rechargeable and can be removable from the carrying device without tools. This allows the batteries to be quickly changeable, which ensures that the carrying device is quickly ready for use again.

An embodiment in which the power supply unit comprises a V-mount and/or B-mount is particularly advantageous. This allows different batteries to be used in a standardized way. The batteries can be exchangeable during operation. A hot swapping capability can enable uninterrupted operation.

The power supply unit can have a charging socket. This allows the power supply unit to be charged directly.

The power supply unit can comprise a battery status indicator. This allows the batteries to be exchanged and/or charged in due time. The battery status indicator can be visual and/or audible.

The localization sensor unit can comprise a position sensor capable of measuring a distance from the camera mount to a target (T) and the position sensor is preferably an ultrasonic sensor and/or a stereo camera and/or a time-of-flight camera and/or a LiDAR sensor and/or an infrared sensor and the localization sensor unit is preferably arranged on the camera mount.

In the context of this invention, target refers to the object that serves as a reference object for positioning the camera mount and/or a fixed camera thereon. The target is preferably the ground, which can be natural or artificial. The distance to such a target is easy measurable and accessible for most camera shots. The ground can also comprise stairs and/or slopes. However, a target can also be any object that is detectable by a position sensor and accessible during the camera shot.

A position sensor that is an ultrasonic sensor is advantageous, as it allows a distance to be measured independently of light and therefore also in darkness. In addition, the target can also have a reflective and/or transparent surface. This type of position sensor is therefore particularly suitable if the target composites water or other liquids. Ultrasonic sensors are also robust.

A position sensor, which is a stereo camera, is advantageous as it provides high-resolution and precise measurement data of the target. In addition, a large area of the target can be measured.

A position sensor, which is a time-of-flight camera, is advantageous as it allows distances to be measured quickly and accurately. The sensor is also suitable for non-textured surfaces and can be used in the dark with additional infrared lighting. Time-of-flight cameras are also characterized by their compact design.

A position sensor, which is a LiDAR sensor, is advantageous as it allows distances to be measured with high resolution and accuracy. In addition, the LiDAR sensor can measure distances even in darkness and/or at great distances.

A position sensor, which is an infrared sensor, is advantageous because it allows distances to be measured quickly. Infrared sensors are also characterized by their compact design.

In one embodiment, the localization sensor unit comprises two or more of the aforementioned position sensors, thereby enabling redundant measurement of the distance. In addition, different sensors can be selectable for different targets or scenes. This makes the carrying device particularly flexible in use.

The position sensor is preferably arranged on the camera mount, thereby ensuring a constant distance between the position sensor and a camera mounted on the camera mount.

The localization sensor unit can also comprise a receiver for signals from a global navigation satellite system such as GPS and/or GLONASS and/or Galileo and/or Beidou. This allows a rough positioning of the carrying device. In addition, such a receiver offers the advantage that the carrying device can be locatable, which increases safety.

The localization sensor unit can comprise a transmitter element and control signals for controlling the motor can be transmittable, in particular wireless transmittable, by means of the transmitter element.

In a preferred embodiment, the control signals can be transmittable wirelessly. This allows the carrying device and, in particular, the camera mount to be flexible and freely movable. Wireless transmission can be carried out using Bluetooth. This type of transmission is particularly energy-efficient and suitable for smaller data transfer rates. Wireless transmission can be carried out using Wi-Fi. This type of transmission is particularly advantageous for high data transfer rates. Wireless transmission can be carried out using ultra-wideband. This type of transmission is particularly advantageous for high data transfer rates and short transmission distances. In addition, this type of data transmission is energy efficient.

In a further embodiment, the control signals can be transmittable via cable. This embodiment is advantageous because it enables secure and interference-free data transmission. In addition, high data transfer rates can be achievable.

The localization sensor unit can comprise an acceleration sensor and/or a gyroscope.

An acceleration sensor can measure the acceleration of the camera mount and/or a camera mounted thereon. This allows the motor to be controlled more precisely, which allows a more stable image to be recorded.

An acceleration sensor can be designed capacitively, preferably as a micro-electromechanical system sensor. Such an acceleration sensor has a low power consumption and is inexpensive. An acceleration sensor can also be designed as a piezoelectric sensor. Such an acceleration sensor is particularly suitable for oscillating movements.

A gyroscope can measure the tilting of the camera mount and/or a camera mounted thereon. This allows the motor to be controlled more precisely, which allows a more stable image to be recorded.

A gyroscope can be designed as a micro-electromechanical system sensor. Such a gyroscope is particularly compact, cost-effective and energy efficient. A gyroscope can also be designed as a fiber optic gyroscope. Such a gyroscope is larger and has no moving parts. In addition, such a gyroscope is very precise.

In one embodiment, the camera mount can comprise a gimbal, in particular a gyrostabilized gimbal. This allows a mounted camera to be stabilized and tilted and/or panned in a controlled manner. In a further embodiment, an external gimbal can be attachable to the camera mount and/or the cable.

The localization sensor unit can comprise a separate power supply unit. The power supply unit can comprise one or more rechargeable batteries. Preferably, such a battery can be detachable from the localization sensor unit without tools. The localization sensor unit can also comprise a charging socket and/or a wireless charging capability. In a further embodiment, the localization sensor unit can be supplied with power by the power supply unit of the motor.

The camera mount can comprise a quick-mounting system for mounting a camera.

A quick-mounting system allows a camera to be quickly attachable to and detachable from the camera mount.

Preferably, a quick-mounting system allows a camera to be attachable and/or detachable without tools. This allows for particularly flexible attachment and removal of a camera. A quick-mounting system can comprise a quick-release plate holder. Quick-release plates are widely used and allow a camera to be attached in a standardized way to such a quick-release plate holder. A quick-mounting system can also comprise a dovetail. This allows a camera to be attached in a particularly secure position. A quick-mounting system can also comprise a clamp with which a camera is clampable. Such a quick-mounting system is particularly cost-effective.

The motor can be a brushless DC motor.

This type of motor is highly durable. It also enables precise and smooth movement. This is particularly advantageous for stable camera guidance. Brushless DC motors are also quiet, which is also beneficial for image recording. In addition, such a motor can be designed to be compact.

The support arm, in particular the second section of the support arm, can be adjustable in height relative to the mounting element.

This allows the carrying device to be adaptable to the dimensions of the movable object, in particular to the body size of a camera operator. This improves wearing comfort and allows a camera operator to carry the carrying device for longer periods without discomfort.

The height relative to the mounting element can be adjustable continuously or stepwise. Continuous adjustment allows for precise adjustment. Stepwise adjustment allows for quick and reproducible adjustment of the height. Continuous adjustment can be achieved by means of a telescopic connection between the first and second section of the support arm. Stepwise adjustment can be achieved by means of a locking system. The carrying device can comprise a motor by means of which the height relative to the mounting element can be adjustable. This allows the height to be adjustable during carrying. In addition, different heights can be stored as presets so that they are tailored to individual camera operators.

In one embodiment, the second section of the support arm can be adjustable in length. This allows the distance between the camera mount and a movable object to be adjustable. This can improve user comfort. The length can also be adjusted continuously or stepwise, with the same advantages as described before. Continuous adjustment can be achieved by means of a telescopic system. Stepwise adjustment can be achieved by means of a locking system.

The carrying device can comprise an input device and a transmitter element, and control signals for controlling the motor can be transmittable, in particular wirelessly transmittable, by means of the transmitter element. The input device is preferably detachable, in particular without using tools, from the carrying device.

The motor can be controllable by means of an input device. The target which serves as a reference object can also be selectable or changeable by means of an input device. In addition, third-party components such as a gimbal and/or light sources can be controllable by means of an input device.

The input device can comprise a screen, in particular a touchscreen. This allows for simple and precise operation of the input device. The input device can comprise buttons and/or switches and/or encoders and/or joysticks. In addition, the input device can comprise a microphone, which enables the use of a voice-user interface.

The input device can preferably be attachable to the camera mount without tools. In a preferred embodiment, the input device can be attachable and detachable from the camera mount by means of a quick-mounting fastener. The input device can be indirectly attached to the camera mount via a flexible arm. This allows the input device to be aligned to meet the needs of the operator.

The input device can comprise a separate power supply unit. The power supply unit can comprise one or more rechargeable batteries. Preferably, such a battery can be detachable from the input device without tools. The input device can also comprise a charging socket and/or a wireless charging capability. In a further embodiment, the input device can be supplied with power by the power supply unit of the motor.

An input device that can be detachable from the carrying device is advantageous because it allows the operator to position the input device flexibly. A carrying device can comprise one or more additional input devices. This allows a particularly high degree of flexibility to be achieved. An additional input device can be operable by a second operator. The control signal can be transmittable as described before.

The height of the support arm relative to the mounting element can also be controllable by means of an input device if the carrying device comprises a corresponding motor.

The carrying device can comprise a motor control unit including a receiver element by means of which control signals for controlling the motor can be received from the transmitter element of the input device and/or the transmitter element of the localization sensor unit.

The motor control unit can control the speed and/or direction of rotation and/or the acceleration and/or the torque of the motor. This allows the motor to be controllable precisely, which can further improve the stable camera guidance.

The receiver element can receive control signals via cable and/or wirelessly. Preferably, the receiver element can receive control signals wirelessly, as described before for the transmitter elements. The receiver unit can also receive control signals from other external or third-party devices. This increases the flexibility of the carrying device.

The mounting element can comprise a mechanical interface for attachment to an aerial drone frame or payload mount, allowing airborne stabilization and control of the vertical position of the camera mount.

This allows for almost perfectly stable filming even when using drones.

The object of the invention is also achieved by a camera system comprising a carrying device as disclosed and a camera.

This allows stable camera guidance of the camera. The camera can be designed as described before. The carrying device is particularly advantageous for heavy cameras, as these are particularly difficult to stabilize and place physical stress on the operator. The camera is attached to the camera mount of the carrying device. In a preferred embodiment, the camera mount comprises a quick-release plate holder and the camera comprises a quick-release plate. This makes it particularly easy to attach and detach the camera from the carrying device.

Image information, in particular an image, generated by the camera can be transmittable, in particular wirelessly transmittable, for controlling the motor of the carrying device. The image information, in particular an image, can be receivable by the receiving element of the motor control unit.

Image information can comprise a raw and/or preprocessed and/or a color channel and/or intensity values of one or multiple images and/or image sections.

The image information can be used in addition to the sensor data from the localization sensor unit to control the motor, and thereby further stabilize the camera guidance.

A horizon and/or a virtually defined horizon and/or a landmark, which is preferably definable by means of an input device, can be kept constant during camera movement. This can be particularly advantageous if the target object is temporarily undetectable by the localization sensor unit.

The image information can be transmittable via cable and/or wirelessly. Preferably, the image information is transmittable wirelessly, as described before for the transmitter elements.

The object of the invention is also achieved by a computer-implemented method for positioning the camera mount of the carrying device as disclosed, comprising:
- Identifying a target (T),
- Determining a relative set point position of the camera mount in relation to the target (T),
- Receiving sensor data measured by means of a localization sensor unit,
- Determining the relative position of the camera mount in relation to the target (T),
- Determining the positional difference between the relative position of the camera mount and the relative set point position of the camera mount,
- Determining the motor movement necessary for the motor to compensate for the positional difference,
- Sending control signals for the determined motor movement to the receiver element of the motor control unit.

The target can be set by an operator using the input device. The target can be marked and/or selected on a screen. The target can also be set without an operator, by using the current sensor signal of the localization sensor unit as the target. This enables particularly fast detection of the target.

The relative set point position of the camera mount relative to the target can also be set using the input device. The relative set point position can be entered by entering absolute distances using the input device. The relative set point position can also be entered using a numeric stepper and/or slider and/or rotary knob and/or plus/minus button and/or quick selection fields. The relative set point position can also be entered using voice input. The relative set point position of the camera mount relative to the target can also be set without an operator by defining the current position as the set point position. This is particularly easy if the current position is to be maintained above the target.

During operation, sensor data can be received continuously, preferably at a frequency that can be set by the operator, from the localization sensor unit. Whereby the receiving frequency can be constant or variable. The sensor data can already be pre-processed by the localization sensor unit. Such preprocessing can include smoothing of data.

The sensor data received can be further processed and/or combined if several sensor units are available. This sensor data can be used to determine the relative position of the camera mount to the target.

The required motor movement can be determined over one or more determined relative positions. By taking into account several determined relative positions, outliers can be detected and removed. Particularly in difficult terrain such as stairs, it can be advantageous to include several relative positions for determining the required motor movement. In addition, a more stable and smoother motor movement can be determined, which enables improved camera guidance.

The object of the invention is also achieved by a computer-implemented method for positioning the camera mount of the carrying device of the camera system as disclosed, comprising:
- Identifying a target (T),
- Determining a relative set point position of the camera mount in relation to the target (T),
- Receiving sensor data measured by means of a localization sensor unit,
- Receiving image information from the camera,
- Identifying one or more features from the image information,
- Determining the relative position of the camera mount in relation to the target (T) and the one or more identified features,
- Determining the positional difference between the relative position of the camera mount and the relative set point position of the camera mount,
- Determining the motor movement necessary for the motor to compensate for the positional difference,
- Sending control signals for the determined motor movement to the receiver element of the motor control unit.

The computer-implemented method can be carried out as described before. In addition, image information can be received from a camera. One or more image features can be selectable by an operator. These can be selectable by means of an input device and/or the camera itself. A feature can be a horizon or virtual horizon or another landmark. The identification of one or more features can also be carried out automatically without operator involvement.

During operation, sensor data and image features can be received continuously, preferably at a frequency that can be set by the operator, from the localization sensor unit and the camera. The sensor data and/or image features can already be pre-processed by the localization sensor unit and/or camera. Such preprocessing can include smoothing of data.

If the sensor data do not allow the relative position of the camera mount in relation to the target to be determined, these values can be neglected when determining the positional difference between the relative position of the camera mount and the relative set point position of the camera mount. This can be the case if no measured value or an unrealistic value is detected by the localization sensor unit.

If the image features do not allow the relative position of the camera mount in relation to the target to be determined, these values can be neglected when determining the positional difference between the relative position of the camera mount and the relative set point position of the camera mount. This can be the case if the feature is not visible or an unrealistic value is detected. The required motor movement can be determined as disclosed before.

The object of the invention is also achieved by a data processing apparatus comprising means for carrying out the methods disclosed.

The object of the invention is also achieved by a computer program product comprising instructions to cause the carrying device as disclosed to execute the steps of the method as disclosed.

The object of the invention is also achieved by a computer program product comprising instructions to cause the camera system as disclosed to execute the steps of the method as disclosed.

The object of the invention is also achieved by a computer-readable medium having stored thereon the computer program product as disclosed.

The object of the invention is also achieved by a method for using a camera system according as disclosed, comprising the following steps:
- Fastening the mounting element to a movable object,
- Mounting the camera to the camera mount of the carrying device,
- Setting or confirming the relative set point position to the target using the input device,
- Optionally setting a virtual horizon using the Camera 100 and/or the input device,
- Capturing an image using the camera.

Fastening can comprise fastening the mounting element to a harness. The harness can then be worn by an operator. Before or during wearing, the height of the support arm, in particular the second section of the support arm, can be adjusted relative to the mounting element so that the carrying device is adapted to the size of the operator. Fastening can also comprise fastening the carrying device via the mounting element to a crane and/or a dolly camera and/or a drone and/or a truss system and/or a cable pulley.

The camera is preferably mounted to the camera mount of the carrying device by means of a quick-mounting fastener. In a particularly preferred embodiment, the camera mount comprises a quick-release plate holder and the camera comprises a quick-release plate. This allows the camera to be clicked onto the camera mount.

The camera and the carrying device can be switched on before, during, or after these steps. The target is preferably set or confirmed using an input device. In a preferred embodiment, the current position of the camera mount can be confirmed as the relative set point position as default. This allows particularly simple and quick operation. If conditions require, a virtual horizon can be defined for improved stabilization.

The invention is further described in embodiments by means of figures in the following:

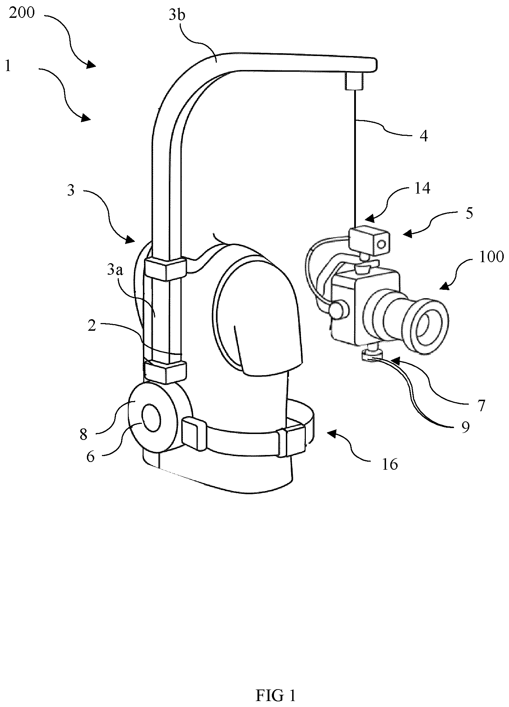

- **FIG 1:**: Schematic representation of a camera system comprising a carrying device and a camera.

**Figure 1** shows a schematic representation of a camera system 200 comprising a carrying device 1 and a camera 100.

The carrying device 1 comprises a support arm 3, a mounting element 2, a harness 16 and a camera mount 5. The support arm 3 comprises a first section 3a and a second section 3b. The second section 3b is continuously height-adjustable relative to the mounting element 2. The carrying device 1 comprises a mounting element 2 which is detachable connected to the harness 16. The harness 16 comprises a hip belt and two shoulder straps. Both the hip belt and the two shoulder straps are adjustable and padded.

A brushless DC motor 6 and a power supply unit 8 are arranged on the first section 3a of the support arm 3. The power supply unit 8 comprises a rechargeable battery, which is detachable from the first section 3a of the support arm 3 without the use of tools. In addition, a motor control unit (not visible) which comprises a receiving element is arranged on the first section 3a of the support arm 3.

The cable 4 is connected to the brushless DC motor 6 and comprises aramid. The camera mount 5 is also connected to the cable 4. The camera mount 5 comprises a quick-mounting system 14, which is designed as a quick-release plate holder. The camera 100 is attached to the quick-change plate holder via a quick-release plate.

The localization sensor unit 7, which comprises two position sensors 9, is also attached to the camera mount 5. One position sensor 9 is designed as a LiDAR sensor and one position sensor 9 as an ultrasonic sensor. The camera mount 5 further comprises an input device (not visible), which comprises a transmitter element. Control signals are transmittable wirelessly via WLAN, by means of the transmitter element.

## Claims

1. Carrying device (1) for carrying a camera (100), comprising a mounting element (2) for mounting the carrying device (1) to a movable object, a support arm (3), a cable (4) and a camera mount (5) for holding at least one camera (100), wherein the support arm (3) comprises a first section (3a) and a second section (3b) and the first section (3a) is attachable or attached to the mounting element(2) and the camera mount (5) is connected or connectable to the cable (4),
**characterized in that** the carrying device (1) comprises a motor (6) which is preferably arranged on the first section (3a) of the support arm (3), and connected to the cable (4), and by means of which the cable (4) and thereby the camera mount (5) is movable, and the carrying device (1) comprises a localization sensor unit (7) by means of which the motor (6) is controllable.

2. Carrying device (1) according to claim 1, **characterized in that** the carrying device (1) comprises a harness (16), which can be worn by a camera operator, and the harness (16) is connected to the mounting element (2).

3. Carrying device (1) according to one of the preceding claims, **characterized in that** the carrying device (1) comprises a power supply unit (8) for supplying the motor (6), which is arranged on the mounting element (2) and/or on the first section (3a) of the support arm (3) and is preferably detachable without using tools.

4. Carrying device (1) according to one of the preceding claims, **characterized in that** the localization sensor unit (7) comprises a position sensor (9) capable of measuring a distance from the camera mount (5) to a target (T) and the position sensor (9) is preferably an ultrasonic sensor and/or a stereo camera and/or a time-of-flight camera and/or a LiDAR sensor and/or an infrared sensor and the localization sensor unit (7) is preferably arranged on the camera mount (5).

5. Carrying device (1) according to one of the preceding claims, **characterized in that** the localization sensor unit (7) comprises a transmitter element (12) and **in that** control signals for controlling the motor (6) are transmittable, in particular wireless transmittable, by means of the transmitter element (12).

6. Carrying device (1) according to one of the preceding claims, **characterized in that** the localization sensor unit (7) comprises an acceleration sensor (10) and/or a gyroscope (11).

7. Carrying device (1) according to one of the preceding claims, **characterized in that** the camera mount (5) comprises a quick-mounting system (14) for mounting a camera (100).

8. Carrying device (1) according to one of the preceding claims, **characterized in that** the motor (6) is a brushless DC motor.

9. Carrying device (1) according to one of the preceding claims, **characterized in that** the support arm (3), in particular the second section (3b) of the support arm (3), is adjustable in height relative to the mounting element (2).

10. Carrying device (1) according to one of the preceding claims, **characterized in that** the carrying device (1) comprises an input device (15) and a transmitter element (17), and **in that** control signals for controlling the motor (6) are transmittable, in particular wirelessly transmittable, by means of the transmitter element (17), and **in that** the input device (15) is preferably detachable, in particular without using tools, from the carrying device (1).

11. Carrying device (1) according to one of the preceding claims, **characterized in that** the carrying device (1) comprises a motor control unit (18) including a receiver element (19) by means of which control signals for controlling the motor (6) can be received from the transmitter element (17) of the input device (15) and/or the transmitter element (12) of the localization sensor unit (7).

12. Camera system (200) comprising a carrying device (1) according to one of the preceding claims and a camera (100).

13. Camera system (200) according to claim 12, **characterized in that** image information, in particular an image, generated by the camera (100) is transmittable, in particular wirelessly transmittable, for controlling the motor (6) of the carrying device (1) and that the image information, in particular an image, is receivable by the receiving element (19) of the motor control unit (18).

14. Method for using a camera system (200) according to one of the claims 12 or 13, comprising the following steps:
- Fastening the mounting element (2) to a movable object,
- Mounting the camera (100) to the camera mount (5) of the carrying device (1),
- Setting or confirming the relative set point position to the target using the input device (15),
- Optionally setting a virtual horizon using the Camera 100 and/or the input device (15),
- Capturing an image using the camera (100).

15. Carrying device (1) according to any one of the preceding claims 1-11, **characterized in that** the mounting element (2) comprises a mechanical interface for attachment to an aerial drone frame or payload mount, allowing airborne stabilization and control of the vertical position of the camera mount (5).
